(19) Europäisches Patentamt
European Patent Office
Office européen des brevets

(11) **EP 2 043 303 A1**

(12) **EUROPEAN PATENT APPLICATION**
published in accordance with Art. 153(4) EPC

(43) Date of publication:
**01.04.2009 Bulletin 2009/14**

(51) Int Cl.:
***H04L 12/28*** (2006.01)

(21) Application number: **07768202.9**

(22) Date of filing: **05.07.2007**

(86) International application number:
**PCT/JP2007/063453**

(87) International publication number:
**WO 2008/004617 (10.01.2008 Gazette 2008/02)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **05.07.2006 JP 2006185557**

(71) Applicant: **Kabushiki Kaisha Toshiba
Minato-ku
Tokyo 105-8001 (JP)**

(72) Inventor: **TAKAHASHI, Hideyuki
IPROC, Toshiba Corporation
Tokyo 105-8001 (JP)**

(74) Representative: **HOFFMANN EITLE
Patent- und Rechtsanwälte
Arabellastraße 4
81925 München (DE)**

(54) **TRANSMISSION SYSTEM FOR RAILWAY VEHICLE**

(57)    To provide a transmission system for trains with high redundancy and excellent maintainability, a plurality of transmitters (1), each provided every carriage, each include a transmission repeater controller (4) for controlling associated transmission ports (3), a transmission station (7) that follows a command of the transmission repeater controller to set an own transmission station address in the transmitter, and performs data transmission and reception to and from the transmission ports, and a bypass (8) for keeping up a transmission line between neighboring transmitters at both sides of the transmitter even in a trouble of the transmission repeater controller or of any transmission port, and in each transmitter, the transmission station follows a command from the transmission repeater controller to set an own transmission station address in the transmitter even in an event of operation of a bypass in another transmitter.

**FIG. 2**

EP 2 043 303 A1

## Description

### TECHNICAL FIELD

The present invention relates to a transmission system for trains.

### BACKGROUND ART

In a conventional transmitter to be used for a transmission system for trains as well as electrical appliances to be connected thereto, address setting switches are installed, each of which is configured to manually set for each transmitter and electrical appliance.

With such a configuration, when a network is constructed in a train by connecting each transmitter therein as well as each transmission station provided in each associated electrical appliance therein, unique address can be assigned to each transmitter and associated transmission station, so that one can discriminate any piece of information from/to which member it is transmitted.

However, in the case of setup of a network in a train according to the conventional transmission system for trains, IPV4 (Internet Protocol Version 4: hexadecimal 4 digits) that is now used extensively should be employed. Therefore, many switches for address setting are required to be installed in the transmitters and the electrical appliances, and it renders the switches smaller for accommodation of many switches. As a result, the registration work of addresses for the transmitters and the transmission stations for the electrical appliances has tended to induce a setting mistake by worker, besides the difficulty of the work itself. It therefore has been a desideratum to implement a transmission system for trains that can facilitate the setup of a network in a train.

Japanese Patent Application Laid-Open Publication No. H08-237288 (Patent publication 1) has disclosed a technique, in which transmission stations have had different station numbers sequentially set thereon. However, for transmission stations described in this patent reference, if any transmission station had been down in an address setting, the transmission stations would have deviated addresses relative to actual car numbers in a train, thus constituting a difficulty in application to a train monitor to be adapted for a use of addresses of transmission stations to identify or record a failed device.

Patent publication 1: Japanese Patent Application Laid-Open Publication No. H08-237288

### DISCLOSURE OF INVENTION

The present invention has been devised in view of such problems in the conventional art. It therefore is an object of the invention to provide a transmission system for trains that allows for setup of a network in a train with high redundancy and excellent maintainability.

According to a first aspect of the present invention, there is provided a transmission system for trains, the system comprising a plurality of transmitters each respectively provided, every carriage, with a plurality of transmission ports, and adapted to transmit a data received from any transmission port to a necessary transmission port in accordance with a prescribed command, and a plurality of transmission lines adapted for interconnection between neighboring transmitters, and the system being adapted to perform data transmission and reception in a train of carriages in a networking manner, wherein each transmitter comprises a transmission repeater controller configured to control associated transmission ports, a transmission station configured to follow a command of the transmission repeater controller to set an own transmission station address in the transmitter, and perform data transmission and reception to and from the associated transmission ports, and a bypass configured to keep up a transmission line between neighboring transmitters at both sides of the transmitter even in a trouble of the transmission repeater controller or of any associated transmission port, and wherein, for each transmitter, the transmission station is configured to follow a command from the transmission repeater controller to set an own transmission station address in the transmitter even in an event of operation of a bypass in another transmitter.

According to the aspect of the present invention, a transmission system for trains allows a network to be set up in a train with high redundancy and excellent maintainability.

### BRIEF DESCRIPTION OF DRAWINGS

[Fig. 1] Fig. 1 is a block diagram of a train unit with a transmission system for trains according to a first embodiment of the invention.

[Fig. 2] Fig. 2 is a block diagram of a transmitter of the transmission system.

[Fig. 3] Fig. 3 is a stack diagram of a data signal to be transmitted and received in the transmitter.

[Fig. 4] Fig. 4 is a block diagram of the transmission system in an ex-factory state having exemplary addresses set to transmitters.

[Fig. 5] Fig. 5 is a block diagram of the transmission system in a powered state, where the transmitters each perform verification of a neighboring station.

[Fig. 6] Fig. 6 is a block diagram of the transmission system performing an address setting of a transmitter at a first carriage.

[Fig. 7] Fig. 7 is a block diagram of the transmission system performing an address setting of a transmitter at a second carriage.

[Fig. 8] Fig. 8 is a block diagram of the transmission system performing an address setting of a transmitter at a third carriage.

[Fig. 9] Fig. 9 is a block diagram of the transmission system performing an address setting of a transmitter at a fourth carriage.

[Fig. 10] Fig. 10 is a block diagram of the transmission system performing an address setting of a transmitter at a fifth carriage.

[Fig. 11] Fig. 11 is a block diagram of the transmission system upon completion of address setting of all the transmitters.

[Fig. 12] Fig. 12 is a block diagram of the transmission system in a powered state, where the transmitter at the third carriage is in trouble, and the remaining transmitters each perform verification of a neighboring station.

[Fig. 13] Fig. 13 is a block diagram of the transmission system performing an address setting of the transmitter at the fourth carriage, as the transmitter at the third carriage is in trouble.

[Fig. 14] Fig. 14 is a block diagram of the transmission system upon completion of address setting of all transmitters, as the transmitter at the third carriage is in trouble.

[Fig. 15] Fig. 15 is a block diagram of a train provided a transmission system for trains therein according to another embodiment of the invention.

[Fig. 16] Fig. 16 is a block diagram of a transmitter of the transmission system of Fig. 15.

[Fig. 17] Fig. 17 is a list of exemplary relationships between transmission lines and line lengths in the transmission system of Fig. 15.

[Fig. 18] Fig. 18 is a block diagram of the transmission system of Fig. 15 in a powered state, where the transmitters each perform verification of a neighboring station.

[Fig. 19] Fig. 19 is a block diagram of the transmission system of Fig. 15 performing an address setting of the transmitter at the third carriage, as the transmitter at the second carriage is in trouble.

[Fig. 20] Fig. 20 is a block diagram of the transmission system of Fig. 15 upon completion of address setting of all transmitters, as the transmitter at the second carriage is in trouble.

BEST MODE FOR CARRYING OUT THE INVENTION

There will be described below the preferred embodiments of the present invention into details with reference to the accompanying drawings.

(First Embodiment)

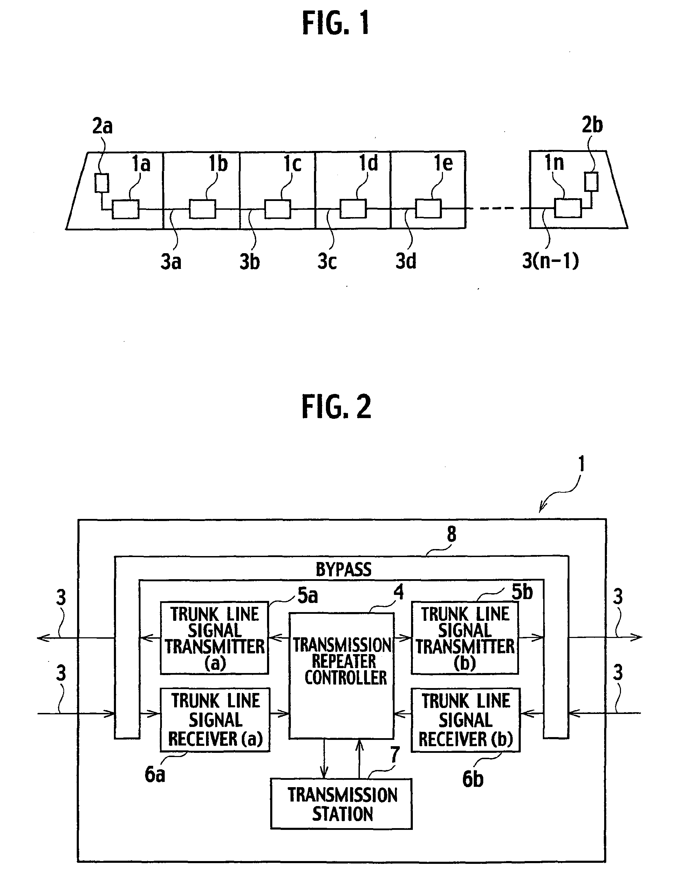

Fig. 1 shows configuration of a transmission system for trains according to the first embodiment of the invention. Fig. 2 shows configuration of a transmitter of the transmission system for trains.

This embodiment includes a total number of n (n: arbitrary integer equal to or larger than 2) transmitters 1a, 1b, 1c, 1d, 1e, ..., 1n installed every carriage in a train, and connected in a point-to-point manner by transmission lines 3a, 3b, 3c, 3d, ..., 3n-1 for transmission and reception of data, and has a pair of displays 2a and 2b connected to the transmitters 1a and 1n in a first carriage and a last carriage, respectively. Hereinafter, if no identification is needed among plural transmitters and among plural transmission lines in description, and if explanations are common to all transmitters and to all transmission lines, each transmitter is correctively referred to 1 and each transmission line is correctively referred to 3.

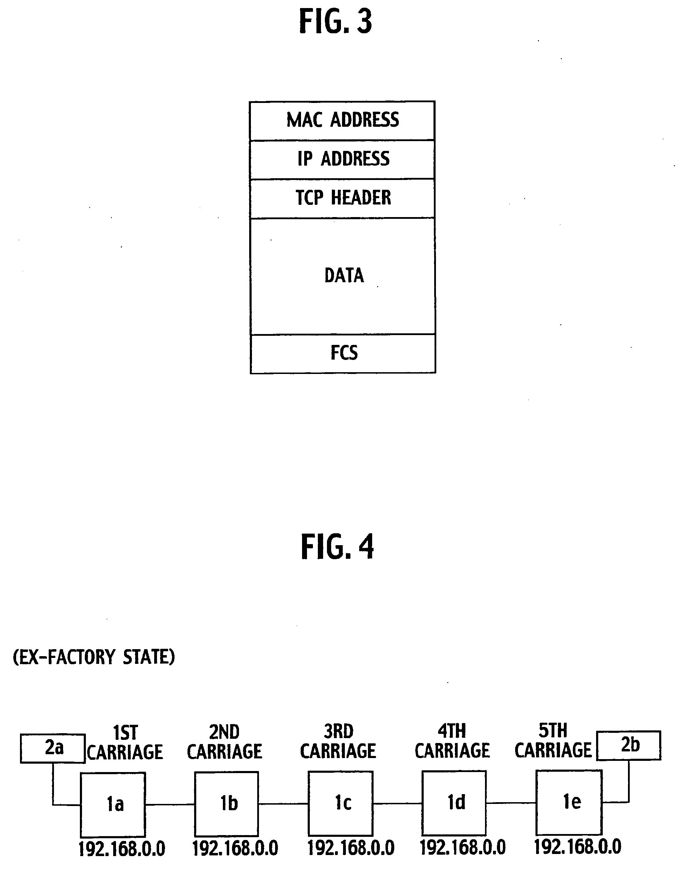

As shown in Fig. 3, the data to be transmitted or received by the transmitter 1 is configured with an MAC address, an IP header, a TCP header (or a UDP header), information data, and a CRC check data (FCS).

As precisely illustrated in Fig. 2, the transmitter 1 is made up by two-port trunk line transmission signal transmitters 5a and 5b, two-port trunk line transmission signal receivers 6a and 6b, a transmission station 7 for transmission and reception of data on own carriage, a transmission repeater controller 4 for controlling respective transmission ports, and a bypass 8 as a bypass device configured for physical interconnection between transmission lines 3 and 3 at both sides of the transmitter 1. The bypass 8 is adapted to operate in the event of a fatal failure in the transmitter 1, as well as when no power is supplied, functioning for physical interconnection between upstream transmission line and downstream transmission line to thereby prevent a decoupling of the network, and is composed mechanical relays.

It is noted that the transmission station 7 may be disposed inside or outside the transmitter 1. Further, a plurality of transmission stations 7 may be provided. In the present embodiment, the transmission system for trains employs the Class C of private address of IPV4 for addressing the transmission stations, which may follow the Class B or the Class A, or IPV6 or the like.

Description is now made of actions of the transmission system for trains configured as described. For comprehension, it is now assumed that the system is implemented on a train of five carriages, with five (n = 5) transmitters 1a to 1e, installed on the first to the fifth carriages, respectively to put in connection.

As shown in Fig. 4, for transmitters 1a to 1e in the ex-factory state, they are each given no specific transmission station address, and all have a factory default address (192. 168. 0. 0) as a common address thereto.

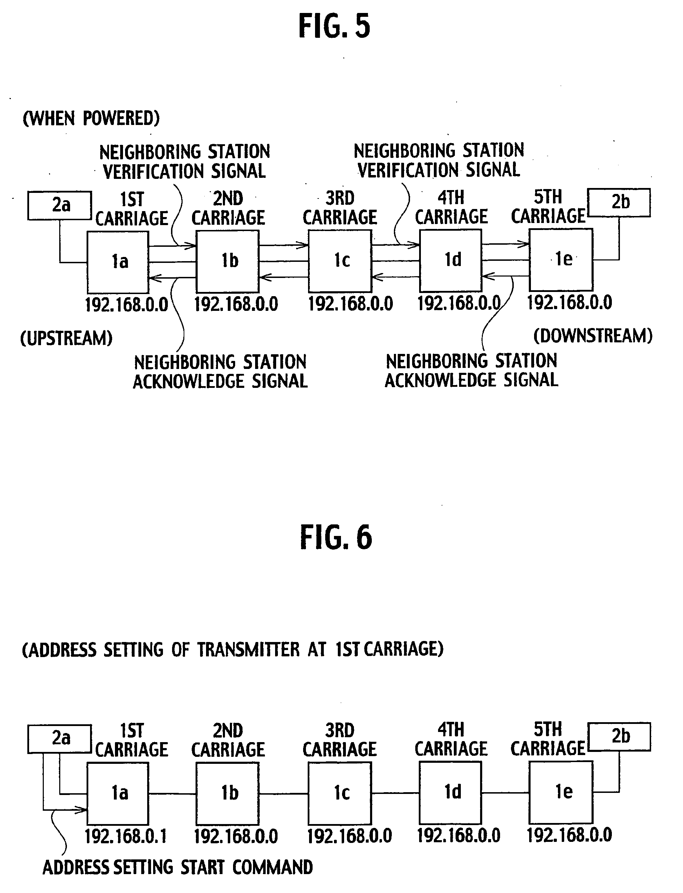

As shown in Fig. 5, when the system is powered before an initial address setting, at each of the transmitters 1a to 1e, the transmission station 7 sends out a neighboring station verification signal to be transmitted downstream, waiting a neighboring station acknowledge signal to be input as a response thereto from downstream. The transmission repeater controller 4 is adapted for measurements of an interval of time from the neighboring station verification signal to the neighboring station acknowledge signal, and the amplitude of an input signal to the trunk line transmission signal receiver 6a.

The transmitters 1a to 1e are each adapted, upon reception of a neighboring station verification signal from upstream, to respond thereto by sending a neighboring station acknowledge signal. As a result, each transmitter 1i (i = a ~ e) having received a neighboring station verification signal from upstream judges that an upstream transmitter 1 is connected, and each transmitter 1i having received a neighboring station acknowledge signal from downstream judges that a downstream transmitter 1 is connected. Accordingly, in the case of Fig. 5, the transmitter 1a of the first carriage recognizes that a transmitter 1 resides simply downstream, each transmitter 1b, 1c, 1d of the second to the fourth carriages recognizes that transmitters 1 reside both upstream and downstream, and the transmitter 1e of the fifth carriage recognizes that a transmitter 1 resides simply upstream.

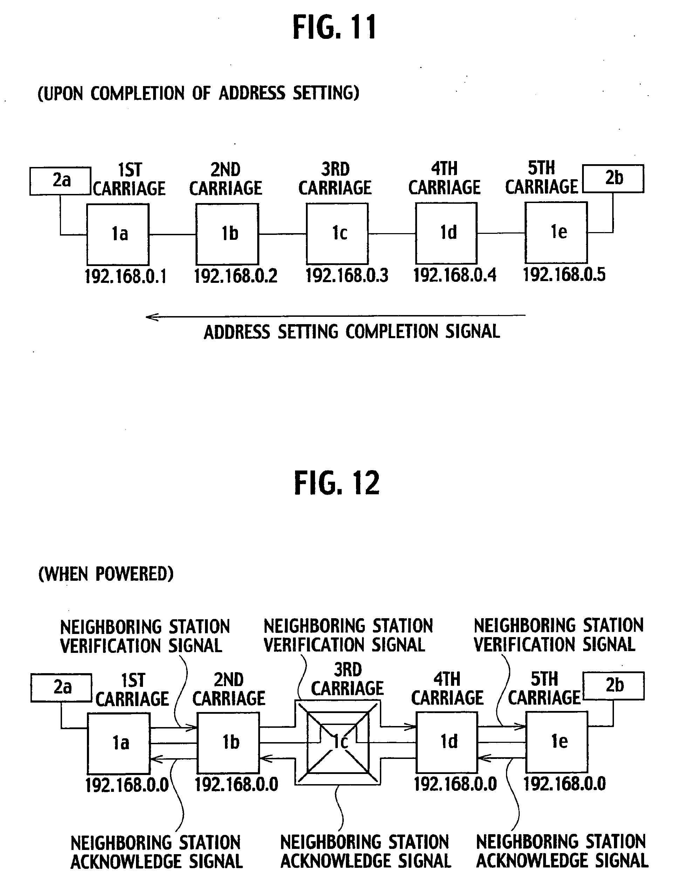

The transmitters 1a to 1e are each adapted to judge, from results of the measurements of time interval and amplitude, whether an associated bypass 8 is operated or not. For instance, as shown in Fig. 12, in the state that the transmitter 1c of the third carriage has been down, and the power of this system is supplied, a neighboring station verification signal from the transmitter 1b is transmitted through a bypass 8 of the transmitter 1b, and received by a trunk line transmission signal receiver 6a of the transmitter 1d, and a neighboring station acknowledge signal from the transmitter 1d is received by a trunk line transmission signal receiver 6b of the transmitter 1b. The neighboring station acknowledge signal is then received by a transmission repeater controller 4 of the transmitter 1b, with a delay of time Tdel to be defined relative to a specified reference value, as follows.

$$Tdel = 2 \times T1 \times L1 \ (ns)$$

where

T1: a signal delay time (ns) per unit distance, and
L1: a distance between transmitters (m).

Generally, for the twisted pair cable, T1 is approximately 5 (ns), and letting the transmission line length L1 between transmitters 1c and 1d be approximately 25 (m), Tdel has a value of approximately 250 (ns). Accordingly, for a delay about 250 ns detected at the transmitter 1b, there is drawn a conclusion such that one associated transmitter 1c is bypassing. For a delay about 500 ns, such a conclusion is to be drawn that two associated transmitters 1c and 1d are consecutively bypassing.

By this actions, each transmitter 1a - 1e grasps whether or not a bypass of a neighboring station is in operation, and stores the power-on state of the system.

Description is now made of the case in which no bypass 8 is operated at the transmitters 1a to 1e. The transmitter 1a of the first carriage, which has no upstream transmitter connected thereto, is to wait an address setting initiation command from the display 2a, see Fig. 6. Upon reception of the address setting initiation command from the display 2a, the transmitter 1a recognizes that it is mounted on the front carriage, and sets up an own transmission station address of the first carriage to be (192. 168. 0. 1).

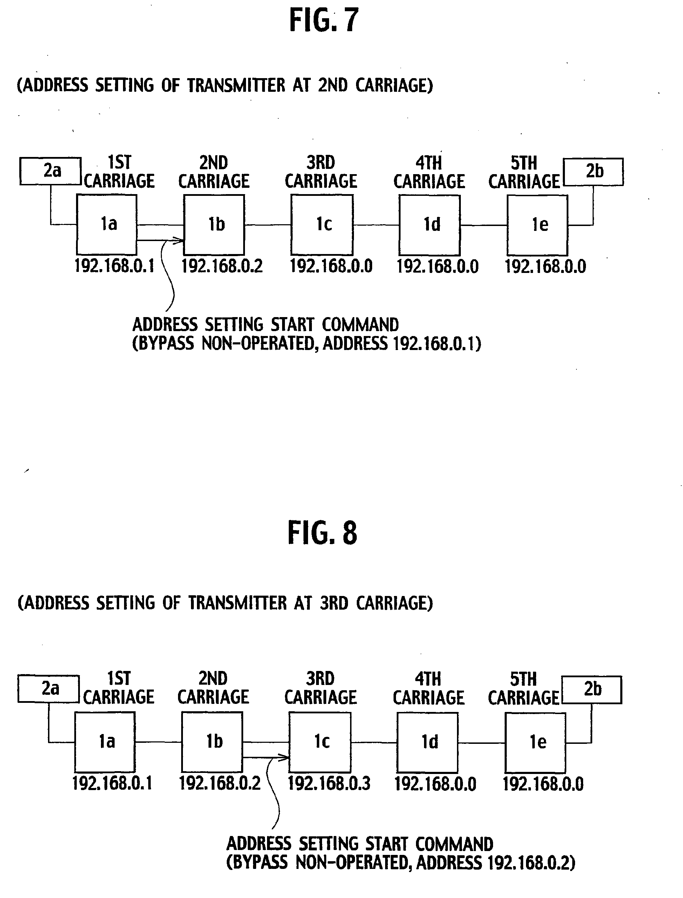

Next, as shown in Fig. 7, the transmitter 1a of the first carriage, as it has set up its own transmission station address, sends to the transmitter 1b of the second carriage a combination of the own transmission station address (192. 168. 0. 1), a working condition of an associated bypass 8 (i. e. , bypass 8 in the transmitter 1a in this case), and the address setting initiation command. As this combination is received by the transmitter 1b of the second carriage, this transmitter 1b responds to the address setting initiation command then received, by determining an own transmission station address of the transmitter 1b in accordance with received information including the transmission station address of the transmitter 1a and the working condition of the associated bypass 8. In the case of Fig. 7, where no bypass is operated and the received transmission station address is (192. 168. 0. 1), the transmitter 1b sets up a one-incremented address (192. 168. 0. 2) as its own transmission station address.

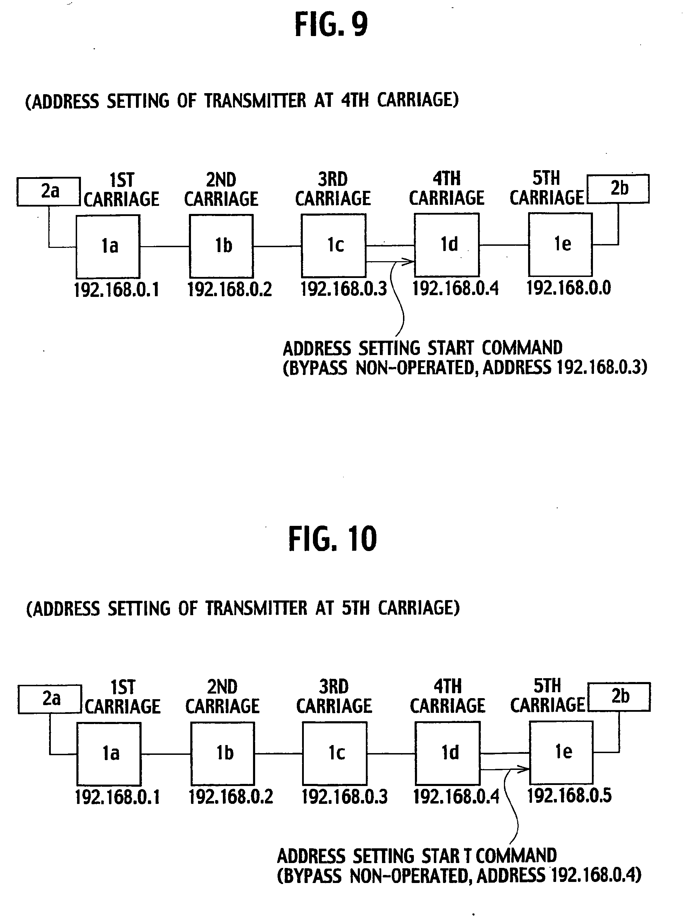

Likewise, as shown in Fig. 8 and Fig. 9, the transmitter 1c on the third carriage and the transmitter 1d on the fourth carriage set up their own transmission station addresses (192. 168. 0. 3) and (192. 168. 0. 4).

As shown in Fig. 10, the transmitter 1e, which is mounted on the rearmost carriage, or the fifth carriage, and has recognized that no transmitter resides downstream, sets up its own transmission station address to be (192. 168. 0. 5). Furthermore, as shown in Fig. 11, the transmitter 1e having set its own transmission station address, or the display 2b having been informed of this state from the transmitter 1e, transmits upstream an address setting completion signal informing of a completion of address setting of transmission stations of whole transmitters 1a to 1e. Then, the transmitters 1a, 1b, 1c and 1d each receive the address setting completion signal, thus recognizing the completion of address setting of transmission stations, respectively. In this state, whole transmitters 1a to 1e have acquired a series of unique addresses (192. 168. 0. 1), (192. 168. 0. 2), (192. 168. 0. 3), (192. 168. 0. 4), and (192. 168. 0. 5) as their own transmission station addresses.

It is noted that, although in this embodiment the address setting is initiated by a command from the display 2a, there may be a multiple train-units coupling signal employed as a trigger for initiation to implement an automatic re-addressing of transmission stations of transmitters 1 in a multiple train-units coupling or decoupling, as well, to thereby reconstruct a network. Further, the initiation may be done when power is supplied, allowing for an automatic address setting.

Description is now made of a method of setting up transmission station addresses when the power is on-switched in the state where, as shown in Fig. 12, a transmitter 1c of the third carriage has been down in the transmission system for trains according to the present embodiment. In this state, the transmitter 1b of the second carriage has information that the bypass 8 of the transmitter 1c in the neighboring third carriage is in operation. This information has been got through a judgment whether or not bypasses are in operation at the start-up of the system.

For each of the transmitters 1a and 1b, the address setting of own transmission station proceeds like Fig. 6 or Fig. 7, as it corresponds to a normal case.

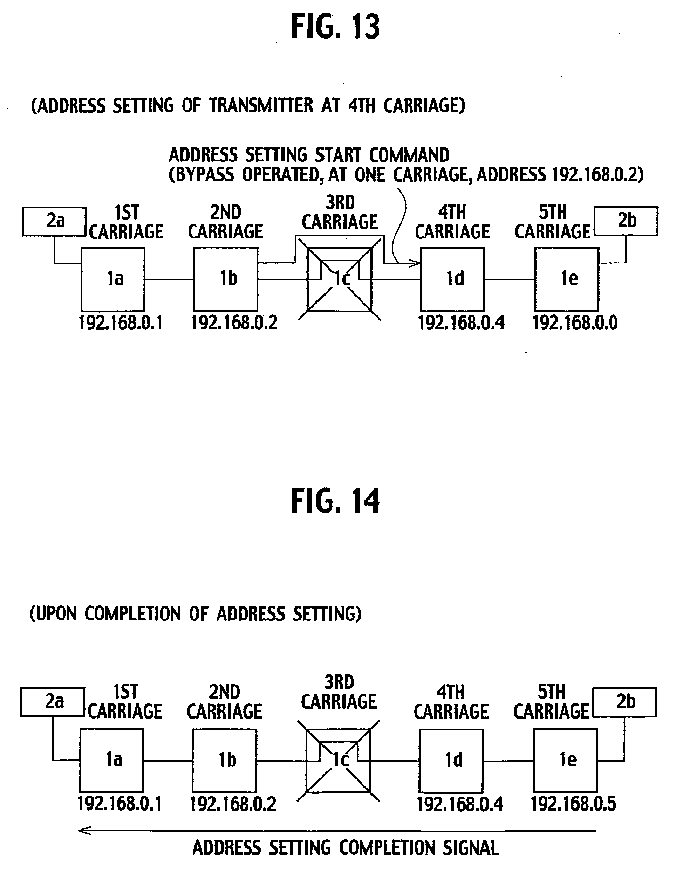

Then, as shown in Fig. 13, the transmitter 1b of the second carriage, as it has set up its own transmission station address, sends to the transmitter 1d of the fourth carriage a combination of the own transmission station address (192. 168. 0. 2), the number of bypassed transmitters (one transmitter is bypassed in this case), and the address setting initiation command. As this combination is received by the transmitter 1d of the fourth carriage, this transmitter 1d responds to the address setting initiation command then received, by determining its own transmission station address in accordance with received information. In the case, the received address is (192. 168. 0. 2) and one transmitter is bypassed, and the transmitter 1d sets up a two-incremented address (192. 168. 0. 4) as its own transmission station address.

For the transmitter 1e of the fifth carriage the address setting of own transmission station proceeds according to processes shown in Figs. 10 and 11. As a result, except for the transmitter 1c being failed, the remaining transmitters each have a unique own transmission station address set up in correspondence to the carriage number, like the normal case, and the address setting is completed.

The failed transmitter 1c will be recovered, with a default transmission station address (192. 168. 0. 0). In this respect, the transmission system for trains is configured to remake the address setting of whole transmitters, when the transmission station address (192. 168. 0. 0) before address setting is added to the network, so that the respective transmitters 1a, 1b, 1c, 1d, and 1e have their own transmission station addresses (192. 168. 0.1), (192. 168. 0. 2), (192. 168. 0. 3), (192. 168. 0. 4), and (192. 168. 0. 5) set up without changes except for the added transmitter 1c.

As will be seen from the foregoing description, according to the present embodiment, a transmission system for trains is adapted for an automatic setting of unique transmission stations address to each transmitter 1 in the network. Even with a transmitter 1 in trouble, the remaining transmitters 1 have the same transmission station addresses assigned thereto as they would have in a normal case, without having un-matching transmission station addresses to associated carriage numbers, respectively. The transmission system for trains thus allows for enhanced redundancy, and rapid construction of network.

It is noted that although the present embodiment has been described simply of downstream transmission of a neighboring station verification signal, the signal may preferably be sent both downstream and upstream. In such a case, the address setting initiation command may not be accompanied by information on whether a bypass is operated or not, as the discrimination is enabled.

Further, it is noted that although the present embodiment has been described of an address setting initiation command to be sent together with information on presence or absence of bypass operation and an own transmission station address, there may be sent a transmission station address to be set up in order to avoid sending information on presence or absence of bypass operation.

(Second Embodiment)

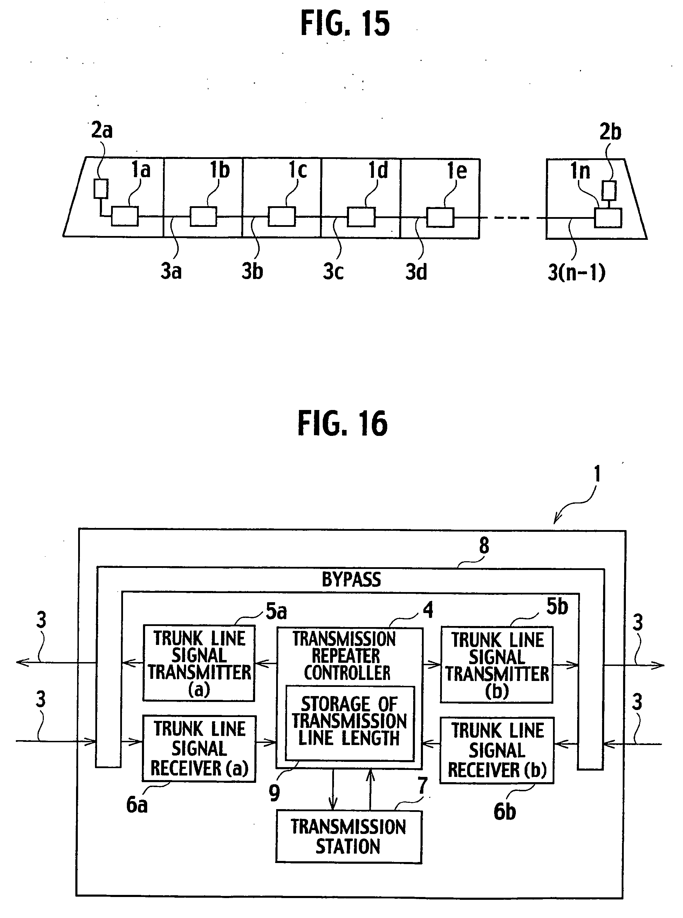

Fig. 15 shows configuration of a transmission system for trains according to the second embodiment of the invention. Fig. 16 shows configuration of a transmitter of the transmission system for trains.

This embodiment includes a total number of n (n: arbitrary integer equal to or larger than2) transmitters 1a, 1b, ..., 1n installed in every carriage, and connected in a point-to-point manner by transmission lines 3a, 3b, ..., 3(n-1) for transmission and reception of data, and has displays 2a and 2b connected to the transmitters 1a and 1n in the front carriage and the rear carriage, respectively. Hereinafter, if no identification is needed among plural transmitters and among plural transmission lines in description, and if explanations are common to all transmitters and to all transmission lines, each transmitter is correctively referred to 1 and each transmission line is correctively referred to 3.

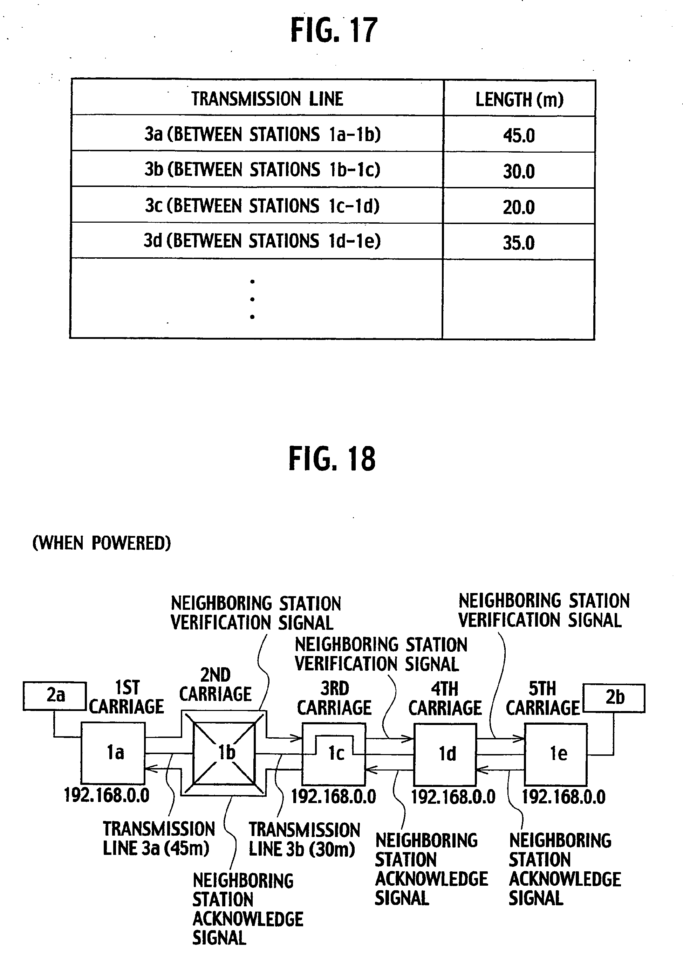

As illustrated in Fig. 16, the transmitter 1 is made up by two-port trunk line transmission signal transmitters 5a and 5b, two-port trunk line transmission signal receivers 6a and 6b, a transmission station 7 for transmission and reception of data on own carriage, a transmission repeater controller 4 for controlling respective transmission ports, a bypass 8 as a bypass device configured for physical interconnection between transmission lines 3 and 3 at both sides of the transmitter 1, and a transmission line length memory 9 for storing therein lengths along transmission lines 3 between transmitters 1. The bypass 8 is adapted to operate in the event of a fatal failure in the transmitter 1, as well as when no power is supplied, functioning for physical interconnection between upstream transmission line and downstream transmission line to thereby prevent a decoupling of the network, and is composed of mechanical relays. The transmission line length memory 9 has stored therein transmission line lengths along respective transmission lines 3a to 3n-1, as exemplified in Fig. 17.

It is noted that the transmission station 7 may be disposed inside or outside the transmitter 1. Further, a plurality of transmission stations 7 may be provided. In the present embodiment, the transmission system for trains employs the Class C of private address of IPV4 for addressing the transmission stations, which may follow the Class B or the Class A, or IPV6 or the like.

Description is now made of actions of the transmission system for trains configured as described. For comprehension, it is now assumed that the system is implemented on a train of five carriages, with five (n = 5) transmitters 1a to 1e put in connection thereto, the transmitters 1a to 1e being interconnected through transmission lines 3a to 3d by transmission line lengths shown in Fig. 17, respectively. For transmitters 1a to 1e in the ex-factory state, they are each given no specific transmission station address, and all have a default address (192, 168, 0, 0) as a common address thereto as shown in Fig. 4.

Description is now made of a method of setting up transmission station addresses of transmitters 1 when a bypass 8 is operated in the transmission system for trains according to the present embodiment.

Fig. 18 illustrates a state of the system in which the transmitter 1b of the second carriage has been down, and power is supplied. In this state, a neighboring station verification signal from the transmitter 1a is transmitted through an operated bypass 8 of the transmitter 1b, and received by a trunk line transmission signal receiver 6a of the transmitter 1c, and as a response thereto, a neighboring station acknowledge signal from this transmitter 1c is received by a trunk line transmission signal receiver 6b of that transmitter 1a. The neighboring station acknowledge signal is then received by a transmission repeater controller 4 of the transmitter 1a, with a delay of time Tdel1 to be defined relative to a specified reference value, as follows.

$$Tdel1 = 2 \times T1 \times L1 \ (ns)$$

where

T1: a signal delay time (ns) per unit line length, and
L1: a line length between transmitters (m).

Generally, for the twisted pair cable, T1 is approximately 5 (ns), and there occurs a delay of approximately 10 ns per 1 m of transmission line. At the transmitter 1a, the transmission repeater controller 4 compares the line length L1 between transmitters 1a and 1b, as it is calculated from a measured Tdell, with a line length data in the transmission line length memory 9. If the Tdel1 is approximately 450 (ns), then the calculated line length L1 between transmitters 1a and 1b equals to a corresponding line length data in the transmission line length memory 9 (= 45 (m)), and a judgment is made of the transmitter 1b such that its bypass 8 is not operated. If the Tdel1 is approximately 750 (ns), then a line length L1 calculated therefrom does not coincide with the above-noted line length data of the transmission line length memory 9 (= 45 (m)), and an additional comparison is made of a line length L1 (= 75 (m)) as a sum of the line length between transmitters 1a and 1b and a line length between transmitters 1b and 1c (= 30 (m)). This line length L1 corresponds to the Tdel1, and a judgment is made of the transmitter1b such that the bypass 8 is operated, and of the transmitter 1c such that its bypass 8 is not operated. Such being the case, the transmitter 1c detects a Tdel1 of approximately 200 (ns), and the transmitter 1d detects a Tdel1 of approximately 350 (ns), with resultant judgments made of the transmitters 1d and 1e such that their bypasses 8 are not operated.

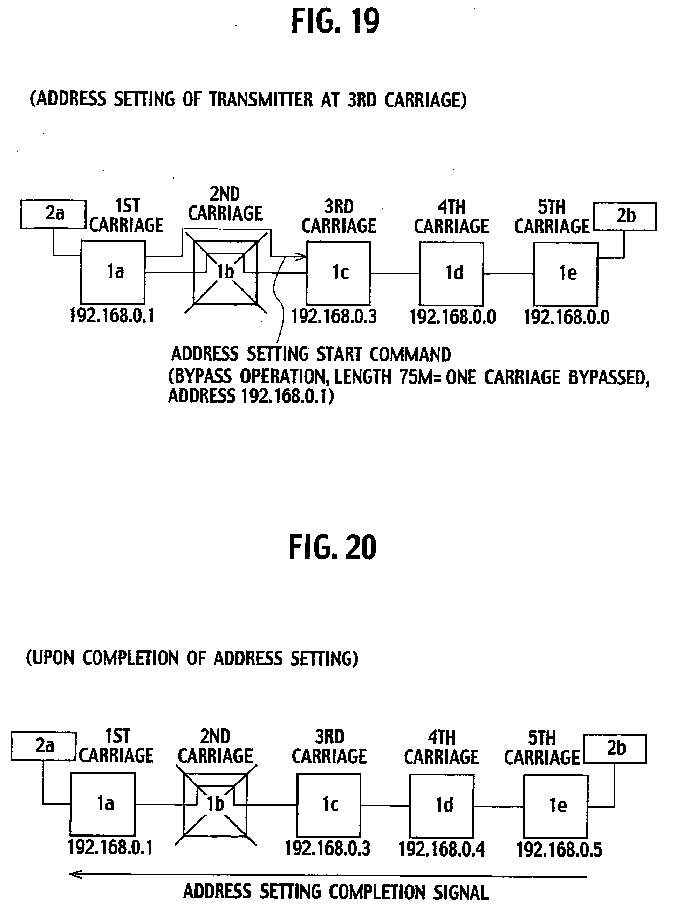

Next, as shown in Fig. 19, the transmitter 1a of the first carriage, as it has set up its own transmission station address (192. 168. 0. 1), sends to the transmitter 1c of the third carriage a combination of the own transmission station address (192. 168. 0. 1), information on bypass operation (bypassing one transmitter), and an address setting initiation command. As this is received by the transmitter 1c of the third carriage, including the information on bypass operation and reception of the address = (192. 168. 0. 1), the transmitter 1c sets up a two-incremented address (192. 168. 0. 3) as its own transmission station address.

Such being the case, now referring to Fig. 20, the transmitter 1d of the fourth carriage receives the address setting initiation command from the transmitter 1c of the third carriage, and sets up, on bases of information on no operation of bypass and received address = 192. 168. 0. 3, its own transmission station address (192. 168. 0. 4). Likewise, the transmitter 1e of the fifth carriage sets up its own transmission station address (192. 168. 0. 5). The transmitter 1e of the fifth carriage, as it has sets up the own transmission station address, sends to whole transmitters 1 an address setting completion signal representing a completion of address setup action. In such a manner, finally, except for the transmitter 1b being failed, the remaining transmitters each have a unique own transmission station address set up in correspondence to the carriage number, like the normal case.

The failed transmitter 1b will be recovered, with a default transmission station address (192. 168. 0. 0). In this respect, the transmission system for trains is configured to remake the address setting of whole transmitters, when the default transmission station address (192. 168. 0. 0) before address setting is added to the network, so that the respective transmitters 1a, 1b, 1c, 1d, and 1e have their own transmission station addresses (192. 168. 0. 1), (192. 168. 0. 2), (192. 168. 0. 3), (192. 168. 0. 4), and (192. 168. 0. 5) set up without changes except for the added transmitter 1b.

As will be seen from the foregoing description, according to the present embodiment, a transmission system for trains is adapted for an automatic setting of unique addresses to transmission stations of transmitters 1 in the network, even in the case of transmitters 1 installed at uneven spatial intervals. Further, even with a transmitter 1 in trouble, the remaining transmitters 1 have the same transmission station addresses assigned thereto as they would have in a normal case, without having un-matching transmission stations addresses to associated carriages numbers. The transmission system for trains thus allows for an enhanced redundancy, and rapid construction of network.

It is noted that although the present embodiment has been described of an address setting initiation command to be sent together with information on presence or absence of bypass operation and an own transmission station address, there may be sent a transmission station address to be set up in order to avoid sending information on presence or absence of bypass operation. It also is noted that although the present embodiment has been described of a transmission line length between transmitters 1 as a data to be stored in a transmission line length memory 9, there may be employed a method of storing a delay time Tdel of neighboring station acknowledge signal.

**Claims**

1. A transmission system for trains, the system comprising:

   a plurality of transmitters each respectively provided, every carriage in a train, with a plurality of transmission ports, and adapted to transmit a data received from any transmission port to a necessary transmission port in accordance with a prescribed command; and
   a plurality of transmission lines adapted for interconnection between neighboring transmitters, and the system being adapted to perform data transmission and reception in the carriage in a networking manner ,

   wherein each transmitter comprises:

   a transmission repeater controller configured to control associated transmission ports;
   a transmission station configured to follow a command of the transmission repeater controller to set an own transmission station address in the transmitter, and perform data transmission and reception to and from the associated transmission ports; and
   a bypass configured to keep up a transmission line between neighboring transmitters at both sides of the transmitter even in a trouble of the transmission repeater controller or of any associated transmission port, and

   wherein, for each transmitter, the transmission station is configured to follow a command from the transmission repeater controller to set an own transmission station address in the transmitter even in an event of operation of a bypass in another transmitter.

2. The system as claimed in claim 1, wherein the transmission station of each transmitter is configured to measure, at a power-on of the system, a response interval after a transmission of a neighboring station verification signal to verify whether a neighboring transmission station is present or not, till a return of a response thereto, judge whether or not a bypass in a neighboring transmitter is operated according to the response interval exceeds a prescribed time interval or not, and store an information of operation/non-operation of the bypass in the neighboring transmission station, sending out to a neighboring transmitter a station address setting command with its own station address and the information of operation/non-operation of the bypass in the neighboring transmission station;
   wherein the transmission station of each transmitter is further configured to add by +2 on a received station address of a neighboring transmitter address in a case that the transmission station has received a station address setting command with an information of operation of a bypass or add by +1 on a received station address of a neighboring transmitter address in a case that the transmission station has received a station address setting command with an information of non-operation of a bypass, to set an own station address.

3. The system as claimed in claim 1, wherein the transmission repeater controller of each transmitter is configured to store information of transmission line lengths connecting between respective neighboring transmitters in the system,
   wherein the transmission station of each transmitter is configured to measure a response interval after a transmission of a neighboring station verification signal to verify whether a neighboring transmission station is present or not, till a return of a response thereto, judge whether or not a bypass in a neighboring transmitter is operated by comparing the measured response interval and a need transmission time via a transmission line between a neighboring transmitter according to the information of transmission line lengths, and send out to a neighboring transmitter a station address setting command with its own station address and the judgment of operation/non-operation of the bypass in the neighboring transmission station;
   wherein the transmission station of each transmitter is further configured to add by +2 on a received station address of a neighboring transmitter address in a case that the transmission station has received a station address setting command with a judgment of operation of a bypass or add by +1 on a received station address of a neighboring transmitter address in a case that the transmission station has received a station address setting command with a judgment of non-operation of a bypass, to set an own station address.

# FIG. 1

# FIG. 2

# FIG. 3

| MAC ADDRESS |
| IP ADDRESS |
| TCP HEADER |
| DATA |
| FCS |

# FIG. 4

(EX-FACTORY STATE)

| 2a | 1ST CARRIAGE | 2ND CARRIAGE | 3RD CARRIAGE | 4TH CARRIAGE | 5TH CARRIAGE | 2b |

| 1a | 1b | 1c | 1d | 1e |

192.168.0.0    192.168.0.0    192.168.0.0    192.168.0.0    192.168.0.0

# FIG. 5

(WHEN POWERED)

NEIGHBORING STATION
VERIFICATION SIGNAL

NEIGHBORING STATION
VERIFICATION SIGNAL

| 2a | 1ST CARRIAGE | 2ND CARRIAGE | 3RD CARRIAGE | 4TH CARRIAGE | 5TH CARRIAGE | 2b |
| | 1a | 1b | 1c | 1d | 1e | |
| | 192.168.0.0 | 192.168.0.0 | 192.168.0.0 | 192.168.0.0 | 192.168.0.0 | |

(UPSTREAM)

(DOWNSTREAM)

NEIGHBORING STATION
ACKNOWLEDGE SIGNAL

NEIGHBORING STATION
ACKNOWLEDGE SIGNAL

# FIG. 6

(ADDRESS SETTING OF TRANSMITTER AT 1ST CARRIAGE)

| 2a | 1ST CARRIAGE | 2ND CARRIAGE | 3RD CARRIAGE | 4TH CARRIAGE | 5TH CARRIAGE | 2b |
| | 1a | 1b | 1c | 1d | 1e | |
| | 192.168.0.1 | 192.168.0.0 | 192.168.0.0 | 192.168.0.0 | 192.168.0.0 | |

ADDRESS SETTING START COMMAND

# FIG. 7

(ADDRESS SETTING OF TRANSMITTER AT 2ND CARRIAGE)

| 2a | 1ST CARRIAGE | 2ND CARRIAGE | 3RD CARRIAGE | 4TH CARRIAGE | 5TH CARRIAGE | 2b |
|---|---|---|---|---|---|---|
| | 1a | 1b | 1c | 1d | 1e | |
| | 192.168.0.1 | 192.168.0.2 | 192.168.0.0 | 192.168.0.0 | 192.168.0.0 | |

ADDRESS SETTING START COMMAND
(BYPASS NON-OPERATED, ADDRESS 192.168.0.1)

# FIG. 8

(ADDRESS SETTING OF TRANSMITTER AT 3RD CARRIAGE)

| 2a | 1ST CARRIAGE | 2ND CARRIAGE | 3RD CARRIAGE | 4TH CARRIAGE | 5TH CARRIAGE | 2b |
|---|---|---|---|---|---|---|
| | 1a | 1b | 1c | 1d | 1e | |
| | 192.168.0.1 | 192.168.0.2 | 192.168.0.3 | 192.168.0.0 | 192.168.0.0 | |

ADDRESS SETTING START COMMAND
(BYPASS NON-OPERATED, ADDRESS 192.168.0.2)

# FIG. 9

(ADDRESS SETTING OF TRANSMITTER AT 4TH CARRIAGE)

| 1ST CARRIAGE | 2ND CARRIAGE | 3RD CARRIAGE | 4TH CARRIAGE | 5TH CARRIAGE |
|---|---|---|---|---|
| 1a | 1b | 1c | 1d | 1e |
| 192.168.0.1 | 192.168.0.2 | 192.168.0.3 | 192.168.0.4 | 192.168.0.0 |

2a     2b

ADDRESS SETTING START COMMAND
(BYPASS NON-OPERATED, ADDRESS 192.168.0.3)

# FIG. 10

(ADDRESS SETTING OF TRANSMITTER AT 5TH CARRIAGE)

| 1ST CARRIAGE | 2ND CARRIAGE | 3RD CARRIAGE | 4TH CARRIAGE | 5TH CARRIAGE |
|---|---|---|---|---|
| 1a | 1b | 1c | 1d | 1e |
| 192.168.0.1 | 192.168.0.2 | 192.168.0.3 | 192.168.0.4 | 192.168.0.5 |

2a     2b

ADDRESS SETTING STAR T COMMAND
(BYPASS NON-OPERATED, ADDRESS 192.168.0.4)

# FIG. 11

(UPON COMPLETION OF ADDRESS SETTING)

| 2a | 1ST CARRIAGE | 2ND CARRIAGE | 3RD CARRIAGE | 4TH CARRIAGE | 5TH CARRIAGE | 2b |
|---|---|---|---|---|---|---|
| | 1a | 1b | 1c | 1d | 1e | |
| | 192.168.0.1 | 192.168.0.2 | 192.168.0.3 | 192.168.0.4 | 192.168.0.5 | |

◄——————————————————————

ADDRESS SETTING COMPLETION SIGNAL

# FIG. 12

(WHEN POWERED)

NEIGHBORING STATION VERIFICATION SIGNAL    NEIGHBORING STATION VERIFICATION SIGNAL    NEIGHBORING STATION VERIFICATION SIGNAL

| 2a | 1ST CARRIAGE | 2ND CARRIAGE | 3RD CARRIAGE | 4TH CARRIAGE | 5TH CARRIAGE | 2b |
|---|---|---|---|---|---|---|
| | 1a | 1b | 1c | 1d | 1e | |
| | 192.168.0.0 | 192.168.0.0 | | 192.168.0.0 | 192.168.0.0 | |

NEIGHBORING STATION ACKNOWLEDGE SIGNAL    NEIGHBORING STATION ACKNOWLEDGE SIGNAL    NEIGHBORING STATION ACKNOWLEDGE SIGNAL

13

# FIG. 13

(ADDRESS SETTING OF TRANSMITTER AT 4TH CARRIAGE)

ADDRESS SETTING START COMMAND
(BYPASS OPERATED, AT ONE CARRIAGE, ADDRESS 192.168.0.2)

| 2a | 1ST<br>CARRIAGE | 2ND<br>CARRIAGE | 3RD<br>CARRIAGE | 4TH<br>CARRIAGE | 5TH<br>CARRIAGE | 2b |
|---|---|---|---|---|---|---|
| | 1a | 1b | 1c | 1d | 1e | |
| | 192.168.0.1 | 192.168.0.2 | | 192.168.0.4 | 192.168.0.0 | |

# FIG. 14

(UPON COMPLETION OF ADDRESS SETTING)

| 2a | 1ST<br>CARRIAGE | 2ND<br>CARRIAGE | 3RD<br>CARRIAGE | 4TH<br>CARRIAGE | 5TH<br>CARRIAGE | 2b |
|---|---|---|---|---|---|---|
| | 1a | 1b | 1c | 1d | 1e | |
| | 192.168.0.1 | 192.168.0.2 | | 192.168.0.4 | 192.168.0.5 | |

ADDRESS SETTING COMPLETION SIGNAL

# FIG. 15

# FIG. 16

# FIG. 17

| TRANSMISSION LINE | LENGTH (m) |
|---|---|
| 3a (BETWEEN STATIONS 1a-1b) | 45.0 |
| 3b (BETWEEN STATIONS 1b-1c) | 30.0 |
| 3c (BETWEEN STATIONS 1c-1d) | 20.0 |
| 3d (BETWEEN STATIONS 1d-1e) | 35.0 |
| ⋮ | |

# FIG. 18

(WHEN POWERED)

# FIG. 19

(ADDRESS SETTING OF TRANSMITTER AT 3RD CARRIAGE)

| 2a | 1ST CARRIAGE | 2ND CARRIAGE | 3RD CARRIAGE | 4TH CARRIAGE | 5TH CARRIAGE | 2b |

1a
192.168.0.1

1b

1c
192.168.0.3

1d
192.168.0.0

1e
192.168.0.0

ADDRESS SETTING START COMMAND
(BYPASS OPERATION, LENGTH 75M= ONE CARRIAGE BYPASSED,
ADDRESS 192.168.0.1)

# FIG. 20

(UPON COMPLETION OF ADDRESS SETTING)

| 2a | 1ST CARRIAGE | 2ND CARRIAGE | 3RD CARRIAGE | 4TH CARRIAGE | 5TH CARRIAGE | 2b |

1a
192.168.0.1

1b

1c
192.168.0.3

1d
192.168.0.4

1e
192.168.0.5

ADDRESS SETTING COMPLETION SIGNAL

<table>
<tr><td colspan="2">**INTERNATIONAL SEARCH REPORT**</td><td colspan="2">International application No.<br>PCT/JP2007/063453</td></tr>
</table>

**A. CLASSIFICATION OF SUBJECT MATTER**
*H04L12/28*(2006.01)i

According to International Patent Classification (IPC) or to both national classification and IPC

**B. FIELDS SEARCHED**

Minimum documentation searched (classification system followed by classification symbols)
H04L12/28-12/46

Documentation searched other than minimum documentation to the extent that such documents are included in the fields searched
Jitsuyo Shinan Koho          1922-1996  Jitsuyo Shinan Toroku Koho  1996-2007
Kokai Jitsuyo Shinan Koho  1971-2007  Toroku Jitsuyo Shinan Koho  1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 8-237288 A  (Toshiba Corp.),<br>13 September, 1996 (13.09.96),<br>Par. Nos. [0019] to [0042]<br>(Family: none) | 1<br>2,3 |
| A | JP 2001-24643 A  (Sony Corp.),<br>26 January, 2001 (26.01.01),<br>Full text; all drawings<br>(Family: none) | 1-3 |
| A | JP 3-206751 A  (Mitsubishi Electric Corp.),<br>10 September, 1991 (10.09.91),<br>Page 4, upper left column, line 6 to lower<br>right column, line 13; Figs. 3, 4<br>& EP 436932 A3 | 1-3 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>24 July, 2007 (24.07.07) | Date of mailing of the international search report<br>07 August, 2007 (07.08.07) |
|---|---|
| Name and mailing address of the ISA/<br>Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08237288 B